# EUROPEAN PATENT SPECIFICATION

(11) **EP 1 282 962 B1**
(45) Date of publication and mention of the grant of the patent: **22.12.2004**
(21) Application number: 00927190.9
(22) Date of filing: 10.05.2000
(51) Int. Cl.: H04L 12/56

(54) **COMMUNICATON SYSTEM AND METHOD FOR CLASSIFYING AND MARKING INFORMATION ELEMENTS TO BE TRANSMITTED IN A NETWORK**
KOMMUNIKATIONSSYSTEM UND VERFAHREN ZUM KLASSIFIZIEREN UND MARKIEREN VON AN EIN NETZ ZU SENDENDEN INFORMATIONSELEMENTEN
SYSTEME ET PROCEDE DE COMMUNICATIONS DESTINES AU CLASSEMENT ET AU MARQUAGE D'ELEMENTS D'INFORMATION A EMETTRE SUR UN RESEAU

(43) Date of publication of application: 12.02.2003
(73) Proprietor: Nokia Corporation, 02150 Espoo (FI)
(72) Inventor: KOISTINEN, Tommi, FIN-00380 Helsinki (FI)
(74) Representative: Leson, Thomas Johannes Alois, Dipl.-Ing.
(86) International application number: PCT/EP2000/004238
(87) International publication number: WO 2001/086885

(56) References cited:
- WO-A-99/48310
- S. BLAKE: "AN ARCHITECTURE FOR DIFFERENTIATED SERVICES, RFC 2475" NETWORK WORKING GROUP, REQUEST FOR COMMENTS, December 1998 (1998-12), pages 1-32, XP002139608 cited in the application

## Description

### FIELD OF THE INVENTION

The present invention relates to a communication system and method for classifying and marking information elements such as packets to be transmitted in one or more networks. The invention is applicable to any type of communication network using information transfer, preferably on a packet basis, and can e.g. be used in communication networks adapted for mobile telecommunication such as GSM (Global System for Mobile Telecommunications), GPRS (General Packet Radio Service), or UMTS (Universal Mobile Telecommunications System) networks including packet-switched networks and circuit-switched networks.

### BACKGROUND OF THE INVENTION

There is an increasing trend to provide differentiated services (DiffServ) in communication networks, in particular in networks based on IP (Internet Protocol).

Generally, there is a need for relatively simple and coarse methods of providing differentiated classes of service for internet traffic, to support various types of applications, and e.g. specific business requirements. The differentiated services approach to providing quality of service in networks implies a small, well-defined set of building blocks from which a variety of services may be built. A small bit-pattern in each packet is used to mark a packet to receive a particular forwarding treatment or per-hop behaviour (PHB), at each network node. This small-bit pattern is the TOS octet in the IPv4 (Internet Protocol Version 4), or the traffic class octet of Ipv6 (Internet Protocol Version 6). A common understanding about the use and interpretation of this bit-pattern is required for inter-domain use, multi-vendor interoperability, and consistent reasoning about expected service behaviours in a network. The IETF DiffServ working group has standardised a common layout to be used for both octets which is called the "DS field" (DS stands for DiffServ). RFC 2474 and RFC 2475 define the architecture and the general use of bits within the DS field. The Working Group will also standardise a small number of specific per-hop behaviours (PHBs) and recommend a particular bit pattern or "code-point" of the DS field for each PHB.

Currently, there are several proposals for the "per-hop behaviours" (PHBs) which define the treatment of the packets inside the IP nodes. A PHB can be used to introduce a range of quality of service levels for the IP traffic. These proposals for PHBs include "Assured Forwarding (AF) PHB" group as defined in RFC 2497, and "Dynamic RT/NRT (DRT/DNRT) PHB" group defined in the "Internet Draft". "RT" stands for "Real-Time", "NRT" means "Non-Real-Time".

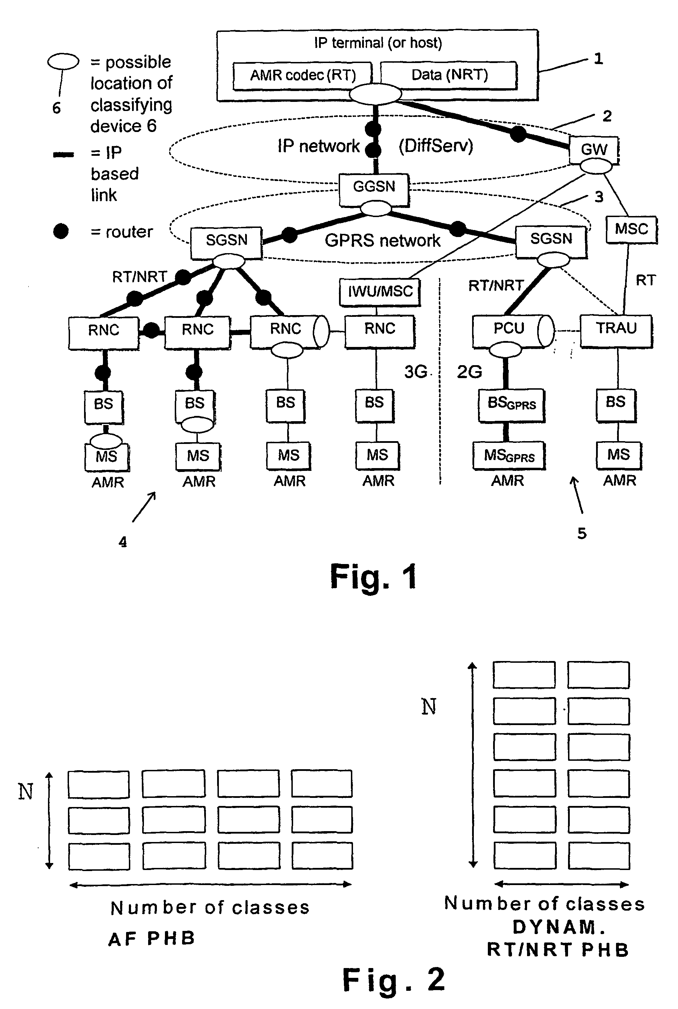

Attached Fig. 2 shows the structure of these PHBs. The left part of Fig. 2 illustrates the "Assured Forwarding (AF)" PHB group which offers four classes with 3 drop precedence (importance) levels N. The right part of Fig. 2 illustrates the "Dynamic RT/NRT" PHB which offers two classes with 6 importance levels N. One of the classes is reserved for RT traffic, whereas the other class is provided for NRT traffic.

The PHBs define the treatment of the packets inside the IP nodes. Other types of networks based on a different protocol or information transmission type, are presently not covered by PHB standardization considerations.

Document WO-A-9 948 310 discloses a mobile communication system having a packet data transmission capability, wherein a dynamic packet-based quality-of-service, Q o S, mechanism is provided within a "Transmission Tunnel" defined by a more static packet data protocol context, PDP context.

### SUMMARY OF THE INVENTION

The invention aims at providing a classifying device which is preferably used to map the radio-network specific characteristics of transferred packets to DiffServ (Differentiated Services) service classes and importance levels. Such a classifying device can be used for a DiffServ compatible radio access network (RAN) of the second generation (2G), or third generation (3G), or any other generation type or structure. The classifying device preferably additionally performs a marking of the classified information elements and is then a classifying and marking device.

The classifying device incorporated in the communication network may preferably classify and mark the traffic using the division into RT and NRT traffic. In such a case, only two classes are provided. Any suitable PHB group or division may be used. For instance, both the AF (Assured Forwarding) and DRT (Dynamic Real-Time) PHB may be employed for the novel classification and marking method. When AF is used, only 3 importance levels will be provided. In case of using DRT PHB, 6 importance levels can be used.

The proposed classification beneficially provides a DiffServ compatibility for radio access networks (RANs). Furthermore, the RLC (Radio Link Control) modes may be naturally mapped to DiffServ classes.

The proposed solution provides a fair treatment of RT traffic (e.g. voice) and NRT traffic in the IP nodes. Without this classification which emulates DiffServ, the RT traffic might suffer from the more bandwidth-aggressive NRT traffic.

Moreover, several customarily used classifying classes such as AMR (Adaptive Multi-Rate) UEM (Unequal Error Protection) classes can naturally be mapped to DiffServ importance levels.

The invention provides a communication system according to claim 1. Preferably, at least two types of networks are provided having different types of transmission protocols, the classifying device being arranged at an interface providing a protocol change. One of the transmission protocols can e.g. be a data network protocol type, preferably an IP type, and the classifying device can be arranged at a location where the data network layer is terminated. The information elements preferably are packets to be transmitted in an at least partially packet-switched network.

At least one network entity may provide a transmission protocol change, the classifying device being located at this network entity.

The classifying device preferably is arranged at or in the user equipment or at an interface between the user equipment and a base station or radio access network controller.

In a preferred embodiment, the classifying device classifies and marks the information elements by assigning them to DiffServ (Differentiated Services) classes, e.g. to Real-Time and Non-Real-Time traffic.

Transparent RLC traffic may be classified and marked as Real-Time traffic, and acknowledged and/or unacknowledged RLC traffic may be classified and marked as Non-Real-Time traffic.

Internal and/or external signalling may be assigned to the highest DiffServ level provided for the class to which this signalling is assigned, preferably Non-Real-Time class.

In a case where the information elements carry voice traffic transmitted using AMR (Adaptive Multi-Rate) technique, the AMR classes are preferably assigned to different DiffServ classes.

Furthermore, a method employing such classification..for traffic transmission is disclosed.

The invention also provides a classifying device to be used in a communication system according to claim 20.

The DiffServ classifying device may be located, in a preferred embodiment, in a user equipment such as a terminal or a mobile station MS. The classifying device may also be located at another position such as in the radio network controller (RNC), base station controller (BSC), base station (BS), or Gateway (GW).

The invention furthermore provides a novel method of handling IP tunnels in the proposed system and method in that the Diffserv class information may be copied from the user data (such as IP packets) in e.g. the RNC or SGSN (Serving GPRS Support Node) for the IP tunnel. This copying may also be effected in a different location such as in a GGSN (Gateway GPRS Support Node) or in the base station (BS). The DiffServ codepoint is hence copied in the above-mentioned locations for the IP tunnel.

Generally, the proposed classifying method allows an easy mapping of the RLC modes to DiffServ classes, as well as a mapping of e.g. AMR codec classes to DiffServ importance levels. The actual mapping may also be based on services. The selection of delay and precedence attributes from a GPRS QoS (Quality of Service) profile may also be selected as basis for the mapping. Alternatively, any other PHB definition may be used for classification such as a potential DiffServ class for the RT traffic, e.g. the Expedited Forwarding (EF) PHB group.

### BRIEF DESCRIPTION OF THE FIGURES

Fig. 1 shows an embodiment of a communication network according to the invention which comprises a classifying device;
Fig. 2 shows two examples of PHB groups, i.e. an Assured Forwarding PHB group, and a Dynamic RT/NRT group, the number of importance levels being designated by N;
Fig. 3 illustrates one embodiment of a classifying method according to the invention;
Fig. 4 illustrates an embodiment of the functional elements of an embodiment of the invention, wherein the DiffServ classifying information is copied in the SGSN for the IP tunnel;
Fig. 5 illustrates an embodiment of the functional elements of an embodiment of the invention, wherein the DiffServ classifying information is copied in the RNC for the IP tunnel;
Fig. 6 illustrates an embodiment of the functional elements of an embodiment of the invention, wherein the DiffServ classifying information is copied in the BS for the IP tunnel; and
Fig. 7 shows functional details of an embodiment of a classification and marking device.

### DETAILED DESCRIPTION OF PREFERRED EMBODIMENTS OF THE INVENTION

Fig. 1 shows an embodiment of a communication system wherein a transmission (call, data transmission or any other type of connection) is performed using at least two networks of different protocol types. In the example shown in Fig. 1, an IP terminal (or host) 1 comprises an AMR (Adaptive Multi-Rate) codec requiring real-time (RT) information transfer, and a data receiving and transmitting device requiring only non-real-time (NRT) data transfer. The IP terminal (or host) 1 is connected to, or part of, an IP-based network 2 providing differentiated services (DiffServ). The IP-based network 2 is able to communicate with a network 3 of another protocol type such as a GPRS network or any other type of packet-switched or circuit-switched network. The network 2 may be the internet.

The network 3 may comprise, as known, at least one gateway GPRS support node (GGSN) for connection to other networks such as network 2, and one or more serving GPRS support nodes (SGSN) for handling the connection to mobile stations (MS) or other type of user equipments. A network 4 is a third generation (3G) network comprising several radio network controllers (RNC) and base stations (BS) arranged in the illustrated manner.

In addition, the networks 2, 3 are able to communicate with a second generation (2G) network 5. The network 5 likewise comprises one or more mobile stations MS, base stations BS, one or more packet control units PCU, and one or more transcoder/rate adapter units (TRAU) which may handle a connection to a SGSN of network 3, or to a mobile switching centre (MSC) co-operating with a gateway (GW) of the IP network 2.

Filled black circuits shown in Fig. 1 represent routers. IP-based links are drawn in bold black lines.

According to the present invention, one or more classifying devices 6 are provided which are illustrated as elliptical shape and may be arranged, as shown in Fig. 1, at the mobile station(s) MS, at a base station BS, at a radio network controller RNC, at a SGSN, at a GGSN, at a PCU, at a GW, and/or at the IP terminal (or host) 1. Preferably, the classifying device 6 is located at the input and/or output of that device at which the IP-based link (bold lines) ends, e.g. the IP layer is terminated. In the current 3G radio access network RAN (such as defined e.g. in release 99 of European Telecommunications Standards Institute ETSI), real-time voice data (AMR) and real-time (RT) circuit-switched data (up to 64 kbps) are transferred from a radio network controller RNC through an interworking unit IWU to a 2G MSC for instance, whereas the non-real time (NRT) packet data (up to 384 kbps) flows from a radio network controller RNC through a SGSN and a GGSN to the IP network 2, as illustrated in Fig. 1.

There may also be installed a RT service which directly goes from the RNC to a SGSN and the IP network 2. Such an RT service may also be used for the voice traffic.

Another use of a 3G RAN is the implementation of an "all-IP concept" which means that the IP connectivity is extended to the base stations BS and even to the mobile stations MS, as well as to RNC-to-RNC links. In the IP-based parts of the network, the DiffServ (differentiated services) framework may be utilised as indicated in Fig. 1 with regard to the IP network 2.

Furthermore, in the 2G RAN 5, a RT service using and providing access to the GPRS network 3 may be implemented. Moreover, the current RT voice service can be adapted to access the IP network 2 through an SGSN as shown in Fig. 1.

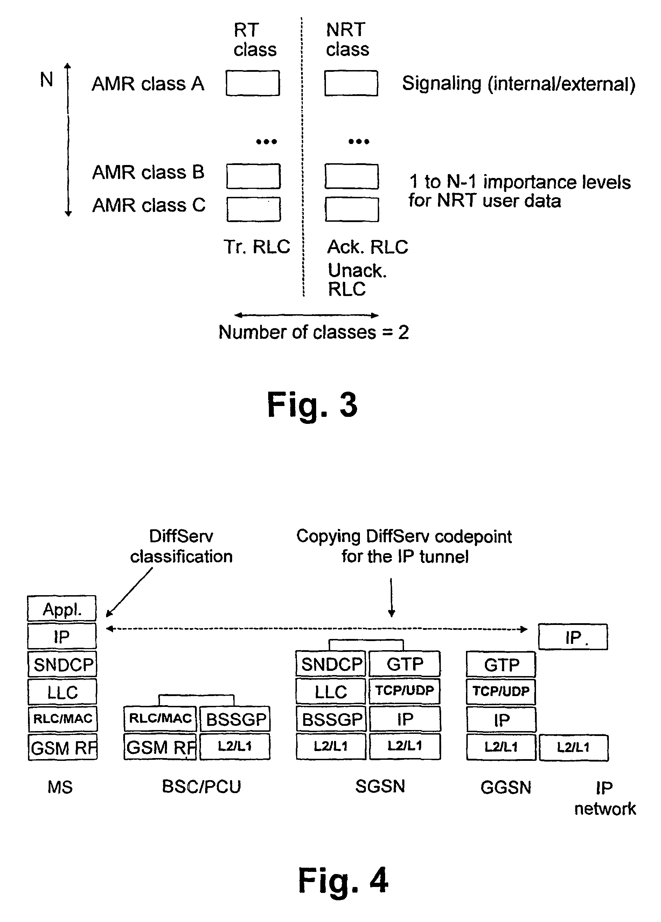

Fig. 3 shows an example of a classification performed by the classifying device 6. In this example, the number of classification classes is 2, with one class being assigned to RT traffic and the other class being reserved for NRT traffic. Both AF and DRT PHB can be used for classification and marking. That means that three importance levels N are provided when using AF, and 6 importance levels N can be used when employing DRT PHB.

As shown in Fig. 3, the RT class (left half of Fig. 3) consists of several importance levels N which are assigned to AMR (Adaptive Multi-Rate) class A, AMR class B, AMR class C, ....

For NRT class (right-hand part of Fig. 3), the importance levels 1 to N-1 are reserved for NRT user data whereas the most important level N is reserved for internal and/or external signalling.

As a preferred example, the RLC layer in the 3G RAN provides three services; acknowledged RLC, unacknowledged RLC, and transparent RLC. The separation of the traffic to RT and NRT traffic may be based on this division: The transparent RLC traffic is classified to the RT class, and the acknowledged and unacknowledged RLC data transfer is classified to the NRT class. Within those classes, the importance (or drop precedence) is preferably assigned as follows:

For RT voice data transfer, the AMR codec already classifies its parameters to separate classes A to C which may be transferred in the radio interface using different channel coding methods. This is called "unequal error protection" (UEP). The most importance class A is assigned to the highest DiffServ importance level whereas AMR classes of decreasing importance are assigned to RT class levels of decreasing importance (here it is assumed that AMR classes are transferred in different IP packets or streams which is applicable at least between BS and MS). For other RT data, similar importance levels shall be defined.

With regard to the NRT traffic, the internal and/or external signalling is assigned to the highest DiffServ importance level, and the user data traffic is assigned to the levels of lower importance.

The location of the classifying device provided according to the invention preferably is either position where the IP layer is terminated. Possible locations are the GGSN, the SGSN, the RNC, BS and MS (Mobile), or the IP terminal as shown in Fig. 1.

Although Fig. 3 shows the distribution of AMR classes to the importance levels of the RT class, it is also possible to use other classes such as Expedite Forwarding (EF) PHB as possible DiffServ classes, preferably for the RT traffic.

Figs. 4 to 6 show some examples of using and locating the proposed DiffServ classification method and system in current and forthcoming networks such as current GPRS network and current and forthcoming 3G (third generation) networks.

Fig. 4 shows an embodiment of a current GPRS system with additional DiffServ support according to the present invention, and illustrates the GPRS protocol stacks in different network elements (MS; BSC/PCU; SGSN; GGSN; IP network) in accordance with an embodiment of the invention. As shown in Fig. 4, the user/application data (IP packets) are classified in the mobile station MS. This classification may alternatively be performed in the BSC/PCU or in the SGSN. In the SGSN, the classification information is copied from the user data to the tunnelling IP packets. This copying point is indicated by the arrow termed "copying DiffServ codepoint for the IP tunnel". The copying of the classification information from the user data to the tunnelling IP packets results in providing and ensuring a forwarding treatment of the IP packets in accordance with the classification results such as shown in Fig. 3. The DiffServ classification performed in the mobile station according to Fig. 4 is indicated by the arrow termed "DiffServ classification".

The abbreviations used in Figs. 4 to 6 are in accordance with the standards and will therefore not be explained in detail. The classification ensures that the IP packet information receives a proper treatment not only in the IP network but also in the RAN.

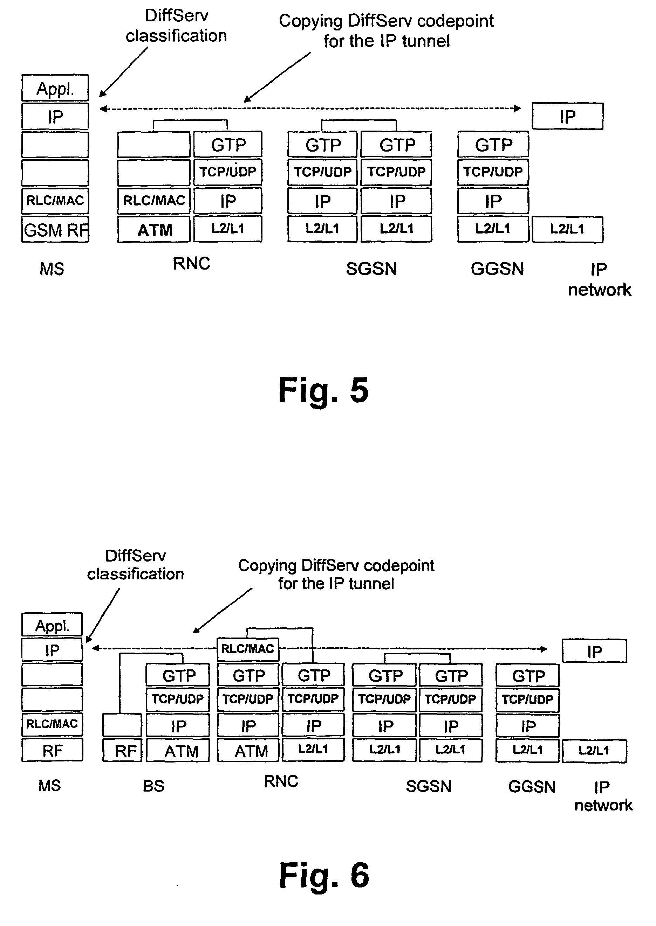

Fig. 5 shows an alternative embodiment and illustrates the protocol stacks in different network elements in a network in accordance with a third generation network (3G RAN as defined in the release 99 standards). The base station BS is not shown. Fig. 5 thus shows the current third generation radio access network RAN with a DiffServ support in accordance with the present invention.

Here as well, the user/application data (IP packets) are classified in the mobile station MS (or alternatively in the BS, the RNC or the SGSN). Different from Fig. 4, the classification information is copied from the user data directly to the tunnelling IP packets in the radio network controller RNC, which is a copying point different from same of Fig. 4. The points of classification and marking (in MS) and copying (in RNC) are indicated by the respective arrows. The other protocol conventions and names are in correspondence with the respective standards. The copying of the classification information to the IP packets may also be performed in the SGSN, in particular when GTP tunnels are terminated, and established again, in the SGSN. "GTP" stands for GPRS Tunneling Protocol. The expression "GTP tunnel" refers to the packetisation of user data (e.g. user's IP packets) into the transporting GTP/UPP(or TCP)/IP frames between RNC and SGSN and between SGSN and GGSN.
If the "transport IP layer" (IP tunnel) does not start already from the MS, the classifying and marking method may be applied in the MS for the user plane IP data. Then, e.g. in the RNC (Fig. 5) where the "transport IP layer" starts there are two choices for classifying the IP tunnel: either use the default mapping according to the disclosed method (e.g. RLC/AMR mapping to DiffServ classes), or use the copying method (copy the already classified DiffServ class from the user data for the IP tunnel).

Fig. 6 discloses a further embodiment of the invention wherein the IP tunnelling is extended to the base station BS in accordance with presumably forthcoming standards. The points of classification (and marking) and copying are likewise indicated by the appropriate arrows. In the embodiment shown in Fig. 6, the IP tunnel extends from the IP network to the base station as indicated by the sequence of IP blocks, whereas, in the embodiment shown in Fig. 5, the IP tunnel merely extends to the RNC and, in the embodiment illustrated in Fig. 4, to the SGSN.

In an alternative embodiment (not shown in the drawings) in which no service such as a real-time service is provided (for instance in current GPRS network), both RLC modes can be used for NRT traffic. In case a RT service is later to be implemented (as well as e.g. a transparent RLC mode), such a RT service will be mapped to RT DiffServ class. This represents a correction possibility for GPRS mapping.

In a 2G (second generation) radio access network RAN which is terminated in GPRS packet data unit (or packet control unit PCU) or in BSC, only two RLC modes are provided, i.e. acknowledged RLC traffic and unacknowledged RLC traffic. The following mapping may be provided: Acknowledged RLC and unacknowledged RLC may be mapped to NRT DiffServ class, with the alternative of mapping unacknowledged RLC traffic to a RT DiffServ class, if used for RT traffic. Transparent RLC traffic is preferably mapped to RT DiffServ class.

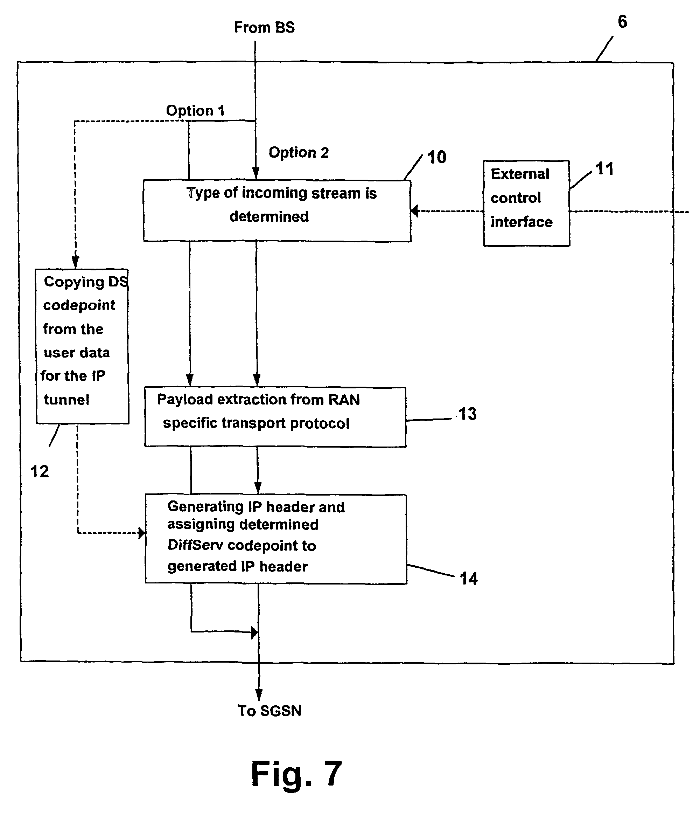

Fig. 7 shows functional details of an embodiment of a classification and marking device 6 which here is located in the RNC.

Reference numeral 10 designates a means or step for determining the type of incoming stream (e.g. RLC type, AMR type) coming from the base station BS.

The classification information (e.g. RLC/AMR classification) may also be provided from the outside. For instance, the classification information may be received from an external control mechanism (e.g. via H.248). In such a case, the device 6 may comprise, or communicate with, an external control interface 11.

Another possibility is that the classification (e.g.) RLC/AMR can be seen from the incoming stream itself, for instance from the protocol headers. In this and the above described case, the step 10 may be omitted. This corresponds to the shown "Option 1", whereas the step 10 is part of "Option 2".

Reference numeral 13 designates a means or step for extracting the payload from the RAN (Radio Access Network) specific transport protocol which payload is then packetized for IP transport in the known manner.

A means or step 14 serves for generating IP headers and assigning determined DiffServ codepoints to the generated IP headers. The means or step 14 may contain, or access, a mapping table which maps the classification types to DiffServ codepoints, e.g.:
"Transparent RLC" ⇒ DiffServ codepoint 101110,
"Unacknowledged RLC ⇒ DiffServ codepoint 000000,
etc.

The steps 10 and 13 are provided for a case in which the "transport IP layer" (IP tunnel) does not start already from the MS but in the RNC. The illustrated default mapping (e.g. RLC/AMR mapping to DiffServ classes) is then performed.

In a case in which the "transport IP layer" (IP tunnel) starts in the MS, the classifying and marking may be performed in the MS for the user plane IP data. Then, in the RNC where the "transport IP layer" starts, the device 6 comprises, or executes, a means or step 12 for copying the already classified DiffServ class from the user data for the IP tunnel. This copied DiffServ codepoint is then assigned, in means or step 14, to the IP header.

Although the invention has been described with reference to specific embodiments, the invention may also be implemented using other types of networks or data handling protocols.

## Claims

1. Communication system comprising several network entities which can transmit and/or receive information elements to or from other network entities,
comprising at least one classifying device (6) adapted to generate marking identifiers to be added to the information elements to be transmitted for classifying the conditions of transport of the information elements between at least two of the network entities,
wherein the classifying device (6) is adapted to classify and mark the information elements by assigning same to Differentiated Services, DiffServ, classes, and
comprising means for copying the marking identifiers in at least one network entity which provides IP tunnel connection to another network entity, the marking identifiers being copied to the information elements to be tunnelled.

2. Communication system according to claim 1, wherein at least two types of networks are provided having different types of transmission protocol, the classifying device being arranged at an interface providing a protocol change.

3. Communication system according to claim 2, wherein one of the transmission protocols is a data network protocol type, preferably an IP type, the classifying device being arranged at a location where the data network layer is terminated.

4. Communication system according to any one of the preceding claims, wherein the information elements are packets to be transmitted in an at least partially packet-switched network.

5. Communication system according to any one of the preceding claims, comprising at least one network entity providing a transmission protocol change, the classifying device being located at this network entity.

6. Communication system according to any one of the preceding claims, comprising at least one user equipment,
wherein the classifying device is arranged at or in the user equipment or at an interface between the user equipment and a base station or radio access network controller.

7. Communication system according to any one of the preceding claims, comprising at least one base station controller providing a transmission protocol change, the classifying device being located at the base station controller.

8. Communication system according to any one of the preceding claims, wherein the classifying device classifies and marks the information elements by assigning same to Real-Time and Non-Real-Time traffic.

9. Communication system according to any one of the preceding claims, wherein transparent RLC traffic is classified and marked as Real-Time traffic, and acknowledged and/or unacknowledged RLC traffic is classified and marked as Non-Real-Time traffic.

10. Communication system according to any one of the preceding claims, wherein internal and/or external signalling is assigned to the highest DiffServ level provided for this class, preferably Non-Real-Time class.

11. Communication system according to any one of the preceding claims, wherein the information elements carry voice traffic transmitted using Adaptive Multi-Rate, AMR, technique, the AMR classes being assigned to different DiffServ classes.

12. Method to be performed in a communication system comprising several network entities which can transmit and/or receive information elements to or from other network entities,
wherein marking identifiers are added to the information elements for classifying the conditions of transport of the information elements between at least two of the network entities,
wherein the information elements are classified and marked by assigning same to Differentiated Services, DiffServ, classes, and
wherein the marking identifiers are copied in at least one network entity which provides IP tunnel connection to another network entity, the marking identifiers being copied to the information elements to be tunnelled.

13. Method according to claim 12, wherein the information elements are classified at an interface providing a change of transmission protocols.

14. Method according to claim 13, wherein one of the transmission protocols is a data network protocol type, preferably an IP type, the classification being performed at a location where the data network layer is terminated.

15. Method according to any one of claims 12 to 14, wherein the information elements are classified and marked at or in a user equipment, or at an interface between the user equipment and a base station or radio access network controller.

16. Method according to any one of claims 12 to 15, wherein the information elements are classified and marked by assigning same to Real-Time and Non-Real-Time traffic classes.

17. Method according to any one of claims 12 to 16, wherein transparent RLC traffic is classified and marked as Real-Time traffic, and acknowledged and/or unacknowledged RLC traffic is classified and marked as Non-Real-Time traffic.

18. Method according to any one of claims 12 to 17, wherein internal and/or external signalling is assigned to the highest DiffServ level provided for the class to which this signalling is assigned, preferably Non-Real-Time class.

19. Method according to any one of claims 12 to 18, wherein the information elements carry voice traffic transmitted using Adaptive Multi-Rate, AMR technique, the AMR classes being assigned to different DiffServ classes.

20. Classifying device (6) to be used in a communication system comprising several network entities which can transmit and/or receive information elements to or from other network entities, the classifying device being adapted to classify the information elements to be transmitted with regard to the conditions of transport of the information elements between at least two of the network entities, and to generate marking identifiers to be added to the information elements for identifying the conditions of transport of the information elements,
wherein the classifying device is adapted to classify and mark the information elements by assigning same to Differentiated Services, DiffServ, classes.

## Patentansprüche

1. Kommunikationssystem mit mehreren Netzeinheiten, die Informationselemente zu oder von weiteren Netzeinheiten senden und/oder empfangen können, mit
zumindest einer Klassifizierungseinrichtung (6), die zur Erzeugung von Markierungskennzeichen eingerichtet ist, die zu den zu sendenden Informationselementen zur Klassifizierung der Transportbedingungen der Informationselemente zwischen zumindest zweien der Netzeinheiten hinzuzufügen sind,
wobei die,Klassifizierungseinrichtung (6) zum Klassifizieren und Markieren der Informationselemente durch eine Zuweisung dieser zu differenzierten Services-, DiffServ, -Klassen eingerichtet ist, und
einer Einrichtung zum Kopieren der Markierungskennzeichen in zumindest einer eine IP-Tunnelverbindung zu einer anderen Netzeinheit bereitstellenden Netzeinheit, wobei die Markierungskennzeichen in die zu tunnelnden Informationselemente kopiert werden.

2. Kommunikationssystem nach Patentanspruch 1, wobei zumindest zwei Typen von Netzen mit verschiedenen Übertragungsprotokolltypen bereitgestellt sind, wobei die Klassifizierungseinrichtung an einer einen Protokollwechsel bereitstellenden Schnittstelle angeordnet ist.

3. Kommunikationssystem nach Patentanspruch 2, wobei eines der Übertragungsprotokolle ein Datennetzprotokolltyp, vorzugsweise ein IP-Typ, ist, wobei die Klassifizierungseinrichtung an einem Ort angeordnet ist, an dem die Datennetzschicht endet.

4. Kommunikationssystem nach einem der vorstehenden Patentansprüche, wobei die Informationselemente in einem zumindest teilweise paketvermittelten Netz zu sendende Pakete darstellen.

5. Kommunikationssystem nach einem der vorstehenden Patentansprüche, mit zumindest einer einen Übertragungsprotokollwechsel bereitstellenden Netzeinheit, wobei sich die Klassifizierungseinrichtung an dieser Netzeinheit befindet.

6. Kommunikationssystem nach einem der vorstehenden Patentansprüche, mit zumindest einer Benutzereinrichtung, wobei die Klassifizierungseinrichtung an oder in der Benutzereinrichtung, oder an einer Schnittstelle zwischen der Benutzereinrichtung und einer Basisstation oder einer Funkzugangsnetzsteuereinrichtung angeordnet ist.

7. Kommunikationssystem nach einem der vorstehenden Patentansprüche, mit zumindest einer einen Übertragungsprotokollwechsel bereitstellenden Basisstationsteuereinrichtung, wobei sich die Klassifizierungseinrichtung an der Basisstationsteuereinrichtung befindet.

8. Kommunikationssystem nach einem der vorstehenden Patentansprüche, wobei die Klassifizierungseinrichtung die Informationselemente durch eine Zuweisung dieser zu Echtzeit- und Nicht-Echtzeitverkehr klassifiziert und markiert.

9. Kommunikationssystem nach einem der vorstehenden Patentansprüche, wobei transparenter RLC-Verkehr als Echtzeitverkehr klassifiziert und markiert wird, und bestätigter und/oder unbestätigter RLC-Verkehr als Nicht-Echtzeitverkehr klassifiziert und markiert wird.

10. Kommunikationssystem nach einem der vorstehenden Patentansprüche, wobei eine interne und/oder externe Signalisierung der höchsten DiffServ-Ebene zugewiesen wird, die für diese Klasse, vorzugsweise eine Nicht-Echtzeit-Klasse, bereitgestellt ist.

11. Kommunikationssystem nach einem der vorstehenden Patentansprüche, wobei die Informationselemente einen unter Verwendung eines adaptiven Mehrfachraten-, AMR-, Verfahrens gesendeten Sprachverkehr tragen, wobei die AMR-Klassen verschiedenen DiffServ-Klassen zugewiesen sind.

12. Verfahren zur Durchführung in einem Kommunikationssystem mit mehreren Netzeinheiten, die Informationselemente zu oder von weiteren Netzeinheiten senden und/oder empfangen können,
wobei Markierungskennzeichen zu den Informationselementen zum Klassifizieren der Transportbedingungen der Informationselemente zwischen zumindest zweien der Netzeinheiten hinzugefügt werden,
wobei die Informationselemente durch eine Zuweisung dieser zu differenzierten Services-, DiffServ, -Klassen klassifiziert und markiert werden, und
wobei die Markierungskennzeichen in zumindest einer eine IP-Tunnelverbindung zu einer anderen Netzeinheit bereitstellenden Netzeinheit kopiert werden, wobei die Markierungskennzeichen in die zu tunnelnden Informationselemente kopiert werden.

13. Verfahren nach Patentanspruch 12, wobei die Informationselemente an einer einen Übertragungsprotokollwechsel bereitstellenden Schnittstelle klassifiziert werden.

14. Verfahren nach Patentanspruch 13, wobei eines der Übertragungsprotokolle ein Datennetzprotokolltyp, vorzugsweise ein IP-Typ, ist, wobei die Klassifizierung an einem Ort durchgeführt wird, an dem die Datennetzschicht endet.

15. Verfahren nach einem der Patentansprüche 12 bis 14, wobei die Informationselemente an oder in einer Benutzereinrichtung, oder an einer Schnittstelle zwischen der Benutzereinrichtung und einer Basisstation oder einer Funkzugangsnetzsteuereinrichtung klassifiziert und markiert werden.

16. Verfahren nach einem der Patentansprüche 12 bis 15, wobei die Informationselemente durch eine Zuweisung dieser zu Echtzeit- und Nicht-Echtzeitverkehrsklassen klassifiziert und markiert werden.

17. Verfahren nach einem der Patentansprüche 12 bis 16, wobei transparenter RLC-Verkehr als Echtzeitverkehr klassifiziert und markiert wird, und bestätigter und/oder unbestätigter RLC-Verkehr als Nicht-Echtzeitverkehr klassifiziert und markiert wird.

18. Verfahren nach einem der Patentansprüche 12 bis 17, wobei eine interne und/oder externe Signalisierung der höchsten DiffServ-Ebene zugewiesen wird, die für die Klasse vorgesehen ist, der diese Signalisierung zugewiesen ist, vorzugsweise eine Nicht-Echtzeit-Klasse.

19. Verfahren nach einem der Patentansprüche 12 bis 18, wobei die Informationselemente unter Verwendung eines adaptiven Mehrfachraten-, AMR-, Verfahrens gesendeten Sprachverkehr tragen, wobei die AMR-Klassen verschiedenen DiffServ-Klassen zugewiesen sind.

20. Klassifizierungseinrichtung (6) zur Verwendung in einem Kommunikationssystem mit mehreren Netzeinheiten, die Informationselemente zu oder von weiteren Netzeinheiten senden und/oder empfangen können, wobei die Klassifizierungseinrichtung eingerichtet ist, die zu sendenden Informationselemente hinsichtlich der Transportbedingungen der Informationselemente zwischen zumindest zweien der Netzeinheiten zu klassifizieren, und Markierungskennzeichen zu erzeugen, die den Informationselementen zur Identifizierung der Transportbedingungen der Informationselemente hinzuzufügen sind, wobei die Klassifizierungseinrichtung zum Klassifizieren und Markieren der Informationselemente durch die Zuweisung dieser zu differenzierten Services-, DiffServ, -Klassen eingerichtet ist.

## Revendications

1. Système de communication comprenant plusieurs entités de réseau qui peuvent transmettre et/ou recevoir des éléments d'information vers ou à partir d'autres entités de réseau,
comprenant au moins un dispositif de classification (6) adapté pour générer des identifiants de marquage destinés à être ajoutés aux éléments d'information à transmettre afin de classifier les conditions de transport des éléments d'information entre deux au moins des entités de réseau,
dans lequel le dispositif de classification (6) est adapté pour classifier et marquer les éléments d'information en les affectant à des classes de services différenciés, DiffServ, et
comprenant des moyens pour copier les identifiants de marquage dans au moins une entité de réseau qui constitue une connexion de passerelle IP vers une autre entité de réseau, les identifiants de marquage étant copiés dans les éléments d'information à envoyer dans la passerelle.

2. Système de communication selon la revendication 1, dans lequel il est prévu au moins deux types de réseaux ayant des types de protocole de transmission différents, le dispositif de classification étant disposé au niveau d'une interface assurant un changement de protocole.

3. Système de communication selon la revendication 2, dans lequel un des protocoles de transmission est un type de protocole de réseau de données, de préférence un type IP, le dispositif de classification étant disposé à un emplacement où la couche de réseau de données se termine.

4. Système de communication selon l'une quelconque des revendications précédentes, dans lequel les éléments d'information sont des paquets destinés à être transmis dans au moins un réseau à commutation de paquets partielle.

5. Système de communication selon l'une quelconque des revendications précédentes, comprenant au moins une entité de réseau assurant un changement de protocole de transmission, le dispositif de classification étant situé au niveau de cette entité de réseau.

6. Système de communication selon l'une quelconque des revendications précédentes, comprenant au moins un équipement utilisateur, dans lequel le dispositif de classification est disposé au niveau de ou dans l'équipement utilisateur ou au niveau d'une interface entre l'équipement utilisateur et une station de base ou au niveau d'un contrôleur de réseau à accès radio.

7. Système de communication selon l'une quelconque des revendications précédentes, comprenant au moins un contrôleur de station de base assurant un changement de protocole de transmission, le dispositif de classification étant situé au niveau du contrôleur de station de base.

8. Système de communication selon l'une quelconque des revendications précédentes, dans lequel le dispositif de classification classifie et marque les éléments d'information en les affectant à un trafic en temps réel et non en temps réel.

9. Système de communication selon l'une quelconque des revendications précédentes, dans lequel le trafic RLC transparent est classifié et marqué en tant que trafic en temps réel et le trafic RLC avec ou sans accusé de réception est classifié et marqué en temps que trafic non en temps réel.

10. Système de communication selon l'une quelconque des revendications précédentes, dans lequel une signalisation interne et/ou externe est affectée au niveau DiffServ le plus élevé prévu pour cette classe, de préférence une classe non en temps réel.

11. Système de communication selon l'une quelconque des revendications précédentes, dans lequel les éléments d'information véhiculent du trafic vocal transmis en utilisant la technique multidébits adaptive AMR (de l'anglais *Adaptive Multi-Rate),* les classes AMR étant affectées à des classes DiffServ différentes.

12. Procédé destiné à être mis en oeuvre dans un système de communication comprenant plusieurs entités de réseau qui peuvent transmettre et/ou recevoir des éléments d'information vers ou à partir d'autres entités de réseau,
dans lequel des identifiants de marquage sont ajoutés aux éléments d'information afin de classifier les conditions de transport des éléments d'information entre deux au moins des entités de réseau,
dans lequel les éléments d'information sont classifiés et marqués en les affectant à des classes de services différenciés, DiffServ,
dans lequel les identifiants de marquage sont copiés dans au moins une entité de réseau qui assure une connexion de passerelle IP vers une autre entité de réseau, les identifiants de marquage étant copiés dans les éléments d'information à envoyer dans la passerelle.

13. Procédé selon la revendication 12, dans lequel les éléments d'information sont classifiés au niveau d'une interface assurant un changement de protocole de transmission.

14. Procédé selon la revendication 13, dans lequel un des protocoles de transmission est un type de protocole de réseau de données, de préférence un type IP, le dispositif de classification étant installé à un emplacement où la couche de réseau de données se termine.

15. Procédé selon l'une quelconque des revendications 12 à 14, dans lequel les éléments d'information sont classifiés et marqués au niveau de ou dans un équipement utilisateur ou au niveau d'une interface entre l'équipement utilisateur et une station de base ou au niveau d'un contrôleur de réseau à accès radio.

16. Procédé selon l'une quelconque des revendications 12 à 15, dans lequel les éléments d'information sont classifiés et marqués en les affectant à des classes de trafic en temps réel et non en temps réel.

17. Procédé selon l'une quelconque des revendications 12 à 16, dans lequel le trafic RLC transparent est classifié et marqué en tant que trafic en temps réel et le trafic RLC avec ou sans accusé de réception est classifié et marqué en tant que trafic non en temps réel.

18. Procédé selon l'une quelconque des revendications 12 à 17, dans lequel une signalisation interne et/ou externe est affectée au niveau DiffServ le plus élevé prévu pour cette classe, de préférence une classe non en temps réel.

19. Procédé selon l'une quelconque des revendications 12 à 18, dans lequel les éléments d'information véhiculent un trafic vocal transmis en utilisant la technique multidébits adaptive AMR, les classes AMR étant affectées à des classes DiffServ différentes.

20. Dispositif de classification (6) destiné à être utilisé dans un système de communication comprenant plusieurs entités de réseau qui peuvent transmettre et/ou recevoir des éléments d'information vers ou à partir d'autres entités de réseau, le dispositif de classification étant adapté pour classifier les éléments d'information à transmettre en fonction des conditions de transport des éléments d'information entre deux au moins des entités de réseau et pour générer des identifiants de marquage destinés à être ajoutés aux éléments d'information afin d'identifier les conditions de transport des éléments d'information, dans lequel le dispositif de classification est adapté pour classifier et marquer les éléments d'information en les affectant à des classes de services différenciés, DiffServ.
